# EUROPEAN PATENT SPECIFICATION

(11) **EP 3 734 462 B1**
(45) Date of publication and mention of the grant of the patent: **05.08.2026**
(21) Application number: 17936889.9
(22) Date of filing: 28.12.2017
(51) Int. Cl.: H04L 9/40, G06F 21/60, G06F 21/62

(54) **INFORMATION PROCESSING DEVICE, INFORMATION PROCESSING METHOD, PROGRAM, AND RECORDING MEDIUM**
INFORMATIONSVERARBEITUNGSVORRICHTUNG, INFORMATIONSVERARBEITUNGSVERFAHREN, PROGRAMM UND AUFZEICHNUNGSMEDIUM
DISPOSITIF DE TRAITEMENT D'INFORMATIONS, PROCÉDÉ DE TRAITEMENT D'INFORMATIONS, PROGRAMME ET SUPPORT D'ENREGISTREMENT

(43) Date of publication of application: 04.11.2020
(73) Proprietor: Digital Arts Inc., Tokyo 100-0004 (JP)
(72) Inventor: DOGU Toshio, Tokyo 100-0004 (JP); MATSUMOTO Takuya, Tokyo 100-0004 (JP); KIMURA Takeshi, Tokyo 100-0004 (JP); INOMATA Kiyoto, Tokyo 100-0004 (JP); YAMAMOTO Ryo, Tokyo 100-0004 (JP)
(74) Representative: AWA Sweden AB
(86) International application number: PCT/JP2017/047216
(87) International publication number: WO 2019/130541

(56) References cited:
- EP-A1- 2 933 751
- GB-A- 2 423 679
- JP-A- 2016 158 189
- JP-A- 2017 167 796
- US-A1- 2005 071 632
- US-A1- 2017 272 406
- TSUYOSHI YAMAMOTO: "Focus on the News", NTT TECHNICAL REVIEW, vol. 24, no. 5, 1 May 2012 (2012-05-01), pages 46 - 47, XP055311669, ISSN: 0915-2318

## Description

### Technical Field

The present invention relates to an information processing device, an information processing method, a program, and a recording medium adapted to handle encrypted information.

### Background Art

It is conventionally known to assign encryption to electronic files and folders in order to ensure security. As an aspect of assigning such encryption, there is a proposed technique in which a transmission terminal stores a predetermined password in a storage part in association with a reception-side email address, encrypts a file attached to an email so as to be decryptable using the predetermined password stored in association with the reception-side email address, a reception-side terminal stores a predetermined password in a storage part in association with a transmission-side email address, and the reception terminal decrypts the encrypted file using the predetermined password stored in association with the transmission-side email address (refer to Patent Literature 1). GB 2423679 A relates to an email server with encryption/decryption capability.

### Citation List

### Patent Literature

Patent Literature 1: JP 2017-167796 A

### Summary of Invention

### Technical Problem

In such an aspect, a dedicated application needs to be installed in each of the transmission terminal and the reception terminal.

The present invention provides an information processing device, an information processing method, a program, and a recording medium capable of confirming encrypted information on a reception-side terminal even when no dedicated application is installed on the reception-side terminal.

### Solution to Problem

The invention is defined by the appended claims.

### Advantageous Effects of Invention

When an aspect in which a user is identified based on information from the user terminal and it is determined whether a file, which is target, is readable; and in a case where it is determined that the file is readable, the file, which is encrypted, is decrypted, the user terminal on which no application for decrypting the file is installed can also decrypt the file by making access to the information processing device.

### Brief Description of Drawings

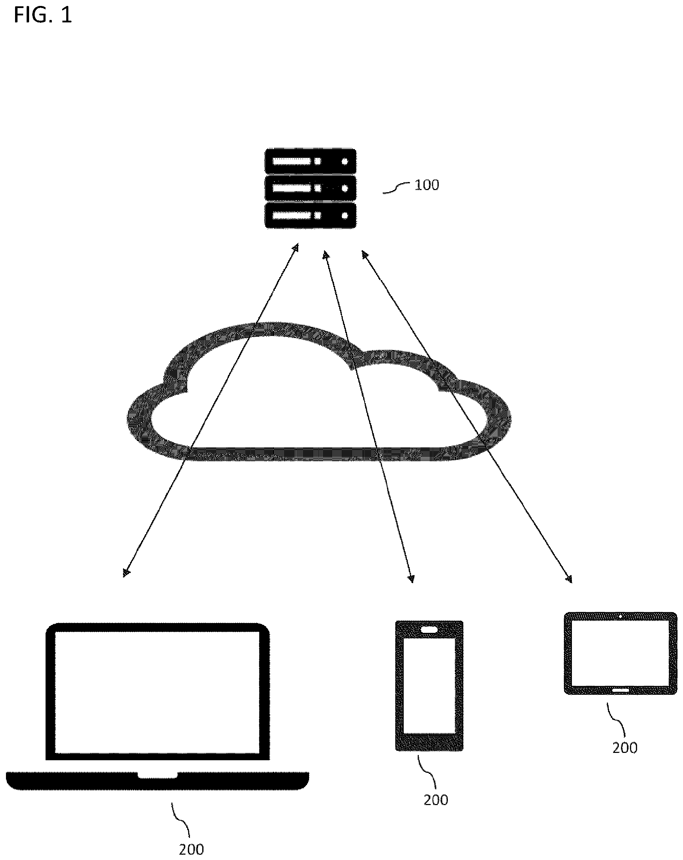

Fig. 1 is a configuration diagram of an information processing system according to a first embodiment of the present invention.
Fig. 2 is a diagram illustrating a data flow in the information processing system according to the first embodiment of the present invention.
Fig. 3 is a diagram that follows Fig. 2, illustrating a data flow in the information processing system according to the first embodiment of the present invention.
Fig. 4 is a diagram that follows Fig. 3, illustrating a data flow in the information processing system according to the first embodiment of the present invention.
Fig. 5 is a block diagram illustrating a configuration of an information processing device in the information processing system according to the first embodiment of the present invention.
Fig. 6 is a diagram illustrating a data flow in an information processing system according to a second embodiment of the present invention.
Fig. 7 is a diagram illustrating a data flow in an information processing system according to a third embodiment of the present invention.
Fig. 8 is a diagram illustrating a data flow in an information processing system according to a fourth embodiment of the present invention.
Fig. 9 is a diagram that follows Fig. 8, illustrating a data flow in the information processing system according to the fourth embodiment of the present invention.

### Description of Embodiments

### First Embodiment

### <<Configuration>>

Embodiments of an information processing device, an information processing system, a program, a recording medium, and an information processing method according to the present invention will be described below with reference to the drawings. In the present embodiment, the term "or" includes the meaning of the term "and". That is, for example, "A or B" in the present embodiment means one of "(A or B) or (A and B)".

The information processing device 100 according to the present embodiment is generated by installing a program such as a user program. This program may be delivered by email, obtained by logging-in after making access to a predetermined URL, or recorded in a recording medium. The program according to the present embodiment is used to generate the information processing device 100 described below, while the recording medium according to the present embodiment is used to record the program. Furthermore, the information processing method of the present embodiment is implemented by the information processing device 100 in which the above program has been installed. The information processing device 100 may execute the information processing method of the present embodiment by executing an application installed in the information processing device 100.

The information processing device 100 according to the present embodiment may include one device, or a plurality of devices. In a case where the information processing device 100 includes a plurality of devices, the devices included in the information processing device 100 may be installed in different rooms or different locations; a part of the information processing device 100 and the other parts of the information processing device 100 may be located in remote locations. The present embodiment uses the terms "information processing device" and "information processing system" for description. Specifically, the term "information processing system" is used in a case where the device is definitely divided into two or more devices, while the term "information processing device" is used in situations in which one device is used for configuration or a plurality of devices is used for configuration.

The information processing device 100 is, for example, a server. In the present embodiment, the description will be given below using an aspect in which the information processing device 100 is a server, as an example.

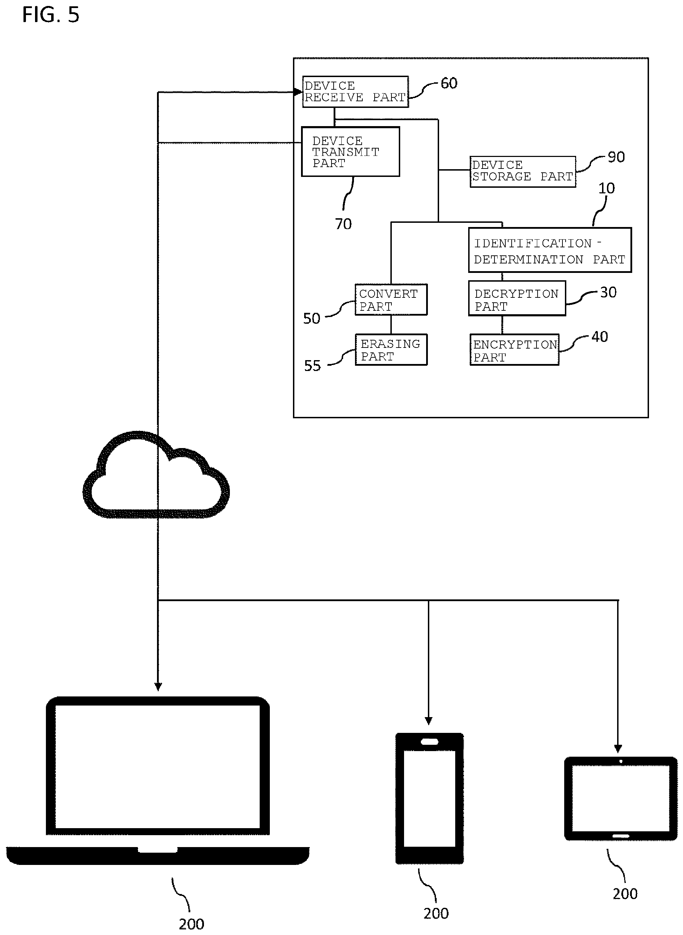

The information processing device 100 of the present embodiment is capable of communicating with a plurality of user terminals 200. The information processing device 100 and the plurality of user terminals 200 constitute an information processing system. Examples of the user terminal 200 include a personal computer, a tablet, or a smartphone. As illustrated in Fig. 5, the information processing device 100 has a device receive part (receive part) 60 that receives information from the user terminal 200, a device transmit part (transmit part) 70 that transmits information to the user terminal 200, an identification-determination part 10 that identifies the user based on information from the user terminal 200 and determines whether the target file is readable, a decryption part 30 that decrypts the encrypted file in a case where it is determined by the identification-determination part 10 that the target file is readable, and a device storage part 90 that stores various types of information.

The user authentication by the identification-determination part 10 may be one-time password authentication, SAML authentication, AD authentication, email address authentication, or a combination of these methods. It is allowable to set such that the user authorization associated with the user authentication may be confirmed by performing user authentication in this manner. Note that, depending on the content of the file, it is allowable to set such that user identification is to be performed with no password requirement or user authentication. Moreover, it is also allowable to set such that it is possible to just confirm whether the file has been opened. In a case where such an aspect is adopted, file handling information regarding the number of times, date and time, frequency, or the like, for the file may be acquired by the information processing device 100 and be stored in the device storage part 90. In this case, the information can be used to research the degree of interest of the user in the file, and the information can be utilized for marketing activities.

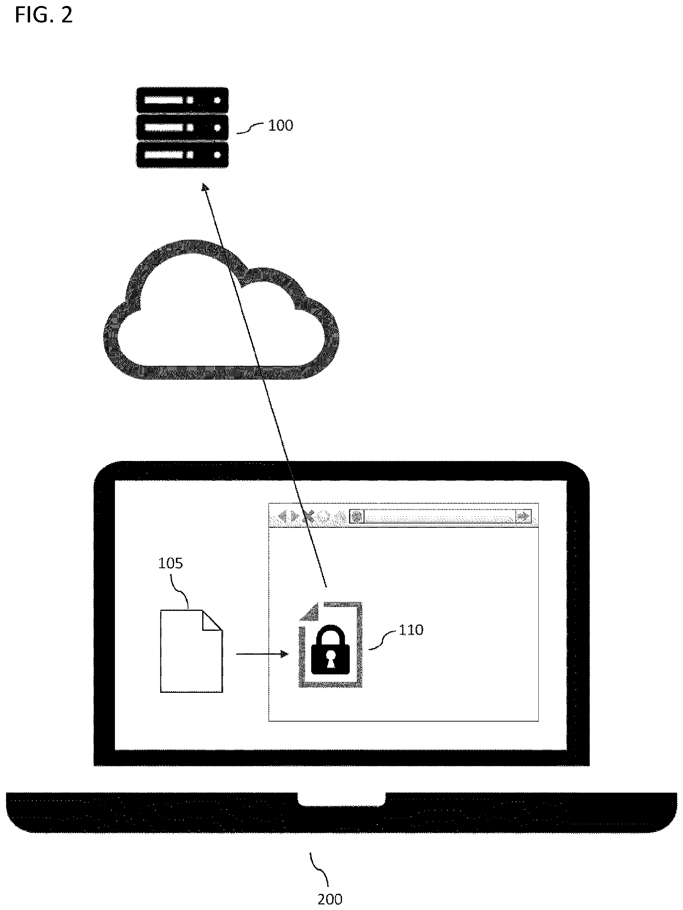

The user terminal 200 is communicatively connected to the information processing device 100 through a browser such as Internet Explore (IE; registered trademark) used on the user terminal 200. For example, when the user terminal 200 executes a wrapped file 105 (refer to Fig. 2) having a predetermined extension, such as an html file, an application such as a browser associated with the extension html or the like is started, allowing the user terminal 200 to be communicatively connected to the information processing device 100. The predetermined extension may be any extension recognizable by the user terminal 200, and html is just an example.

As described above, when the user terminal 200 is communicatively connected to the information processing device 100, the identification-determination part 10 of the information processing device 100 performs user authentication and confirms the user authorization for the wrapped file 105 including an html file, for example. The wrapped file 105 may wrap (or embed) a file such as a first file 110 described below. Information regarding user authentication and user authorization may be specified by a creator who creates the wrapped file 105. By wrapping a file such as the first file 110 in the wrapped file 105 in this manner, the user terminal 200 can recognize the file on the basis of the extension added to the wrapped file 105. Therefore, for example, in a case where an html file or the like is adopted as the wrapped file 105, the user terminal 200 can recognize the file in the format of the html file or the like, facilitating the access to the information processing device 100.

When the identification-determination part 10 of the information processing device 100 confirms that the information in the wrapped file 105 is readable by the user authorization assigned to the user, the first file 110 encrypted from the wrapped file 105 may return to the state before being wrapped in the wrapped file 105, by retrieved from the wrapped file 105 on the user terminal 200. Note that such wrapping is performed by the user who has encrypted the first file 110. Subsequently, the user who receives the wrapped file 105 by email or via a USB flash drive or the like executes the wrapped file 105, and thereby requests the information processing device 100 to perform the user authentication and the confirmation of the user authorization as described above.

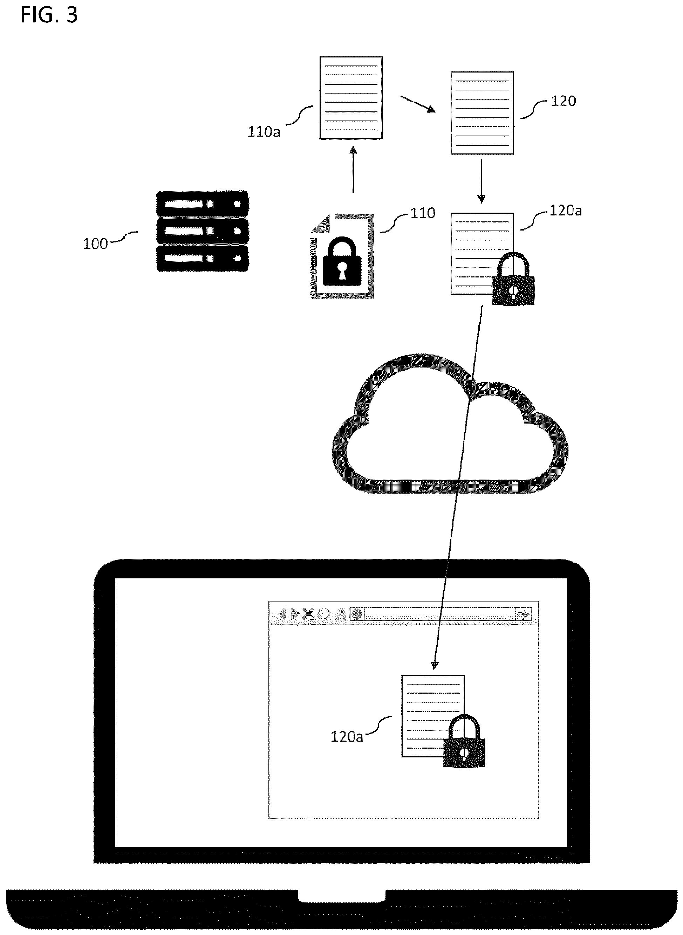

When the encrypted first file 110 is retrieved from the wrapped file 105, the encrypted first file 110 may be transmitted (uploaded) from the user terminal 200, and the device receive part 60 of the information processing device 100 may receive the first file 110 from the user terminal 200. When the device receive part 60 receives the first file 110 in this manner, the decryption part 30 of the information processing device 100 may decrypt the encrypted first file 110 to create a decrypted first file 110a (refer to Fig. 3).

As illustrated in Fig. 5, the information processing device 100 may include a convert part 50 that converts the decrypted first file 110a into a second file 120 (refer to Fig. 3) in a format that can be displayed by the browser of the user terminal 200, and an encryption part 40 that encrypts the second file 120 to create a second file encrypted 120a (hereinafter also referred to as "encrypted second file 120a"). The convert part 50 may convert the decrypted first file 110a including a decrypted word (registered trademark) or Excel (registered trademark) file into the second file 120 such as a PDF (registered trademark) file or an image file, for example. The encryption part 40 may encrypt the second file 120 including such a PDF file or an image file. Examples of extensions that can be converted into a format displayable by the browser of the user terminal 200, such as a PDF file or an image file, include extensions of PDF files, xls files, xlsx files, xlsm files, doc files, docx files, docm files, ppt files, pptx files, pptm files, jpeg files, jpg files, png files, gif files, bmp files, and txt files. Note that any file format of the second file is acceptable as long as the format can be displayed by a browser, and PDF or the like is merely an example.

The device transmit part 70 may transmit the encrypted second file 120a to the user terminal 200. At this time, the device transmit part 70 may transmit the encrypted second file 120a to the browser of the user terminal 200. The user terminal 200 that has received the encrypted second file 120a may store the encrypted second file 120a in a temporary storage area of the browser.

The information processing device 100 may include an erasing part 55 that erases the encrypted second file 120a after the device transmit part 70 has transmitted the encrypted second file 120a to the user terminal 200. The erasing part 55 may erase not only the encrypted second file 120a but also the files related to the encrypted second file 120a, such as the first file 110, the decrypted first file 110a, and the second file 120. Furthermore, it is possible to adopt an aspect in which decrypting the first file 110 to generate the decrypted first file 110a leads to replacement of the first file 110 with the decrypted first file 110a (resulting in disappearance of the first file 110), generating the second file from the decrypted first file 110a leads to replacement of the decrypted first file 110a with the second file (resulting in disappearance of the decrypted first file 110a), and encrypting the second file to generate the encrypted second file 120a leads to replacement of the second file with the encrypted second file 120a (resulting in disappearance of the second file).

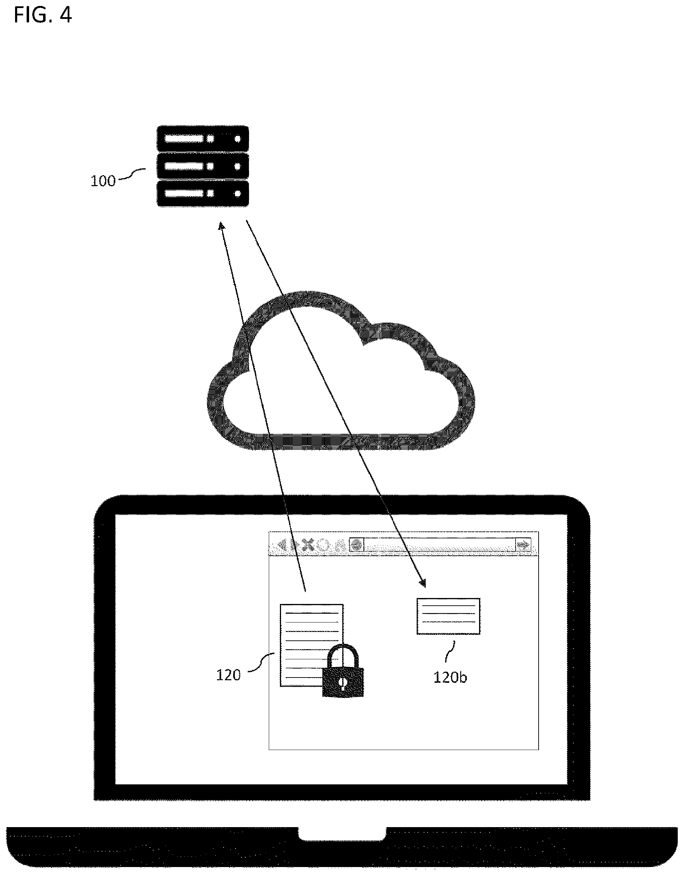

Based on the information from the user terminal 200 who desires to read the encrypted second file 120a, the device receive part 60 may receive partial information of the encrypted second file 120a from the user terminal 200 (refer to Fig. 4). The decryption part 30 may decrypt the partial information of the encrypted second file 120a received from the user terminal 200 in this manner. The device transmit part 70 may transmit (as a reply) partial information 120b of the decrypted second file 120 to the user terminal 200. At this time, the partial information 120b of the second file 120 received by the device receive part 60 may be decrypted by the decryption part 30 to be directly transmitted to the user terminal 200 without being stored in the device storage part 90. In a case where this aspect is adopted, it is possible to prevent the partial information 120b of the decrypted second file 120 from remaining in the information processing device 100. In another case of adopting an aspect in which the partial information 120b of the decrypted second file 120 remains in the information processing device 100, it is allowable to set the partial information 120b of the second file 120 decrypted by the erasing part 55 to be erased.

The user terminal 200 may transmit (posts) the information of the encrypted second file 120a to the information processing device 100 in units of n-bytes ("n" is an integer of 10,240 or more), and the decryption part 30 may decrypt the transmitted information in units of n-bytes of the encrypted second file 120a. Incidentally, the inventors have confirmed that the page drawing average time is converged and stabilized when the information of the encrypted second file 120a partially transmitted and decrypted has the size of 10,240 bytes or more, and thus performing transmission, reception and decrypting in units of 10,240 bytes or more would be advantageous. In addition, the inventors have also confirmed that information of the size 51,200 bytes or more would be more advantageous from the viewpoint of converging the page drawing average time.

The user terminal 200 may transmit the portion of the information of the encrypted second file 120a by the size to be read to the information processing device 100. The size to be read may be the size displayed on a display screen of the user terminal 200 or the information of an identical page. In a case where the size to be read is the size displayed on the display screen of the user terminal 200, the user terminal 200 may transmit the partial information of the encrypted second file 120a to the information processing device 100 every time the screen is scrolled, and then, the decryption part 30 may decrypt the partial information of the encrypted second file 120a received from the user terminal 200, and then, the device transmit part 70 may transmit the partial information of the decrypted second file 120a to the user terminal 200. In a case where the size to be read is information for one page, the user terminal 200 may transmit the partial information of the encrypted second file 120a to the information processing device 100 every time the page is changed, and the decryption part 30 may decrypt the partial information of the encrypted second file 120a received from the user terminal 200, and then, the device transmit part 70 may transmit the partial information of the decrypted encrypted second file 120a to the user terminal 200.

When the file is wrapped in the wrapped file 105, a dedicated application will be used. The dedicated application may be started by right-clicking (double-clicking) the icon for launching the dedicated application, or by dragging and dropping the file to the dedicated application.

It is allowable to use either an already encrypted file or an unencrypted file as a file to be wrapped in the wrapped file 105. When the file is encrypted and wrapped in the wrapped file 105, it is allowable to perform selection for giving a predetermined user the authorization to convert files through the browser. For example, ".html" may be used as the extension at this time. In the case of using an already encrypted file, the encrypted file and the wrapped file 105 that encrypts and wraps the file may be treated as mutually different files. In this case, the creator of the encrypted file can be different from the creator of the wrapped file 105 that encrypts and wraps the file, in some cases. Note that it is also allowable to set such that the already encrypted file can be converted into a format to be wrapped in the wrapped file 105 only when a predetermined authorization is assigned.

When a file such as the first file 110 is encrypted and wrapped in the wrapped file 105, copy/paste may be prohibited, print authorization may be set, or a watermark may be set to appear when printed. In addition, which authentication method is to be used may be set selectable when a file such as the first file 110 is encrypted and wrapped in the wrapped file 105. Note that capturing may be controlled to be prohibited when the file is encrypted and wrapped in the wrapped file 105. In this case, the capture function of the user terminal 200 can be controlled to suppress capturing when the dedicated application is installed in the user terminal 200.

The wrapped file 105 can take various formats including formats of exe files, pdf files, gif files, jpeg files, bmp files, png files, in addition to the html file described above.

### <<Method>>

The information processing method according to the present embodiment can use all aspects of the "configuration" described above. Here, an example of the information processing method will be described below. Note that any configuration described in "method" can be used as the configuration of the present embodiment.

When the user terminal 200 executes the wrapped file 105 (refer to Fig. 2) including an html file or the like, an application such as a browser associated with the extension html or the like is started, permitting the user terminal 200 to be communicably connected with the information processing device 100. When the user terminal 200 is communicatively connected to the information processing device 100 in this manner, the identification-determination part 10 of the information processing device 100 identifies a user on the basis of information from the user terminal 200 and then determines whether the user is authorized to read the information (the first file 110 in the present embodiment) in the target wrapped file 105.

When the identification-determination part 10 determines that the user is authorized to read the information in the wrapped file 105, the encrypted first file 110 within the wrapped file 105 is retrieved from the wrapped file 105.

Next, the encrypted first file 110 is transmitted (uploaded) from the user terminal 200, and then, the device receive part 60 of the information processing device 100 receives the first file 110 from the user terminal 200.

Next, the decryption part 30 of the information processing device 100 decrypts the encrypted first file 110 to create the decrypted first file 110a (refer to Fig. 3).

Next, the convert part 50 of the information processing device 100 converts the decrypted first file 110 into the second file 120 in a format that can be displayed by the browser of the user terminal 200.

Next, the encryption part 40 of the information processing device 100 encrypts the second file 120 to create the encrypted second file 120a.

Next, the encrypted second file 120a is transmitted (as a reply) via the device transmit part 70, to the user terminal 200 that has transmitted the first file 110 to the information processing device 100. At this time, the device transmit part 70 may transmit the second file 120 to the browser of the user terminal 200.

After the encrypted second file 120a is thus transmitted to the user terminal 200, the erasing part 55 erases the first file 110, the decrypted first file 110a, the second file 120, and the encrypted second file 120a.

When the user reads the encrypted second file 120a, the device receive part 60 receives partial information of the encrypted second file 120a from the user terminal 200 (refer to Fig. 4). Subsequently, the decryption part 30 decrypts the encrypted partial information 120b of the second file 120 received from the user terminal 200, and then, the device transmit part 70 transmits the decrypted partial information 120b of the second file 120 to the user terminal 200. As a result, the partial information 120b of the second file 120 can be confirmed by the user.

### <<Functions and Effects>>

Next, functions and effects obtained by the above-described configuration or method and not have been described yet will be mainly described. Note that any configuration described in "Functions and Effects" can be used as the configuration of the present embodiment.

In the present embodiment, in a case where the aspect of confirming the user authentication and the user authorization and decrypting the encrypted file on basis of the user authentication and the user authorization is adopted, the user terminal 200 on which no application for decrypting the file is installed can also decrypt the file by making access to the information processing device 100.

In the case of adopting an aspect in which the encrypted first file 110 received from the user terminal 200 is decrypted to create the decrypted first file 110a and then the decrypted first file 110a is converted into the second file 120, the file can be changed to a predetermined file format of the second file 120 regardless of the file format of the first file 110. For example, while the file cannot be displayed by a browser in a Word or Excel file format, the file can be displayed by the browser by converting the file as the second file 120 in the PDF or image file format.

In the case of adopting an aspect in which the second file 120 is encrypted and then the encrypted second file 120 is transmitted to the user terminal 200, it is advantageous in a point where a certain control can be applied to the second file 120 returned to the user terminal 200. The state in which the second file 120 is not encrypted would allow free operation of the file on the user terminal 200. Fortunately, however, it is possible to prevent such a situation from occurring by adopting the present aspect.

In the case of adopting an aspect in which the device transmit part 70 transmits the encrypted second file 120 to the user terminal 200 and then the second file 120 is erased from the device storage part 90 of the information processing device 100, it is also possible to prevent information from remaining in the information processing device 100 which is a server, for example. Therefore, it is advantageous in that higher security can be achieved.

In the case of adopting an aspect in which, when the user reads the encrypted second file 120a, the device receive part 60 receives the partial information 120b of the encrypted second file 120 from the user terminal 200, the decryption part 30 decrypts the partial information 120b of the second file 120 that is encrypted, received from the user terminal 200, and the device transmit part 70 transmits the partial information 120b of the decrypted second file 120 to the user terminal 200, only the partial information 120b of the second file 120 will be displayed on the user device, making it possible to manage the information in the second file 120 with high security. Note that the partially decrypted information returned to the user terminal 200 may be displayed through a browser, for example, and the cache of the browser may be erased by an instruction from the information processing device 100 at a timing when the information disappears from the display on the screen or the page is changed.

In the case of adopting an aspect in which the decryption part 30 decrypts the information of the encrypted second file 120 received from the user terminal 200 by the size to be read, decryption will be performed for only a very limited range necessary for reading, making it possible to achieve high security.

In the case of adopting an aspect in which the device receive part 60 receives the partial information 120b of the encrypted second file 120 from the user terminal 200 in units of n-bytes ("n" is an integer of 10,240 or more), the decryption part 30 decrypts the partial information 120b of the encrypted second file 120 received from the user terminal 200 in units of n-bytes, and the device transmit part 70 transmits the partial information 120b of the decrypted second file 120 to the user terminal 200 in units of n-bytes, it is possible to converge the page drawing average time as described above and possible to display the decrypted information on the screen in a stable state.

### Second Embodiment

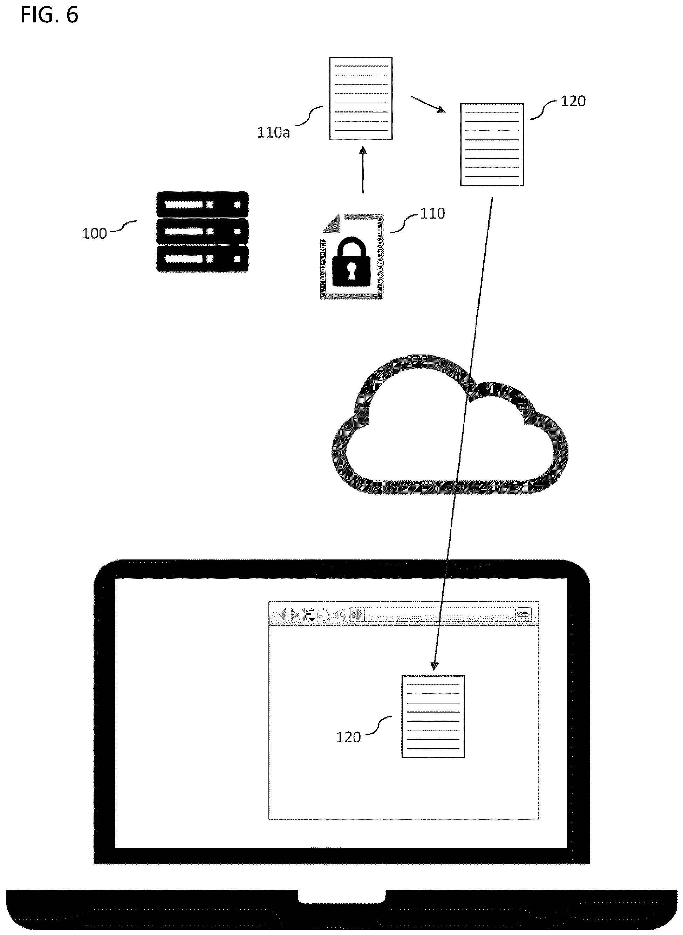

Next, a second embodiment of the present invention will be described mainly with reference to Fig. 6.

The present embodiment has an aspect in which the device receive part 60 receives the encrypted first file 110 from the user terminal 200 (refer to Fig. 2), the decryption part 30 decrypts the encrypted first file 110 to create the decrypted first file 110a (refer to Fig. 6), the convert part 50 converts the decrypted first file 110 to the second file 120, and the device transmit part 70 transmits the second file 120 converted by the convert part 50 to the user terminal 200. In the present embodiment, all aspects described in the first embodiment can be adopted in the present embodiment. The same components as those in the first embodiment will be described with the same reference numerals.

The present embodiment is advantageous in that the control aspect is simpler than in the first embodiment. On the other hand, compared with the present embodiment, the first embodiment is more advantageous with higher security in that the second file 120 is encrypted and returned to the user terminal 200 and that the information of the second file 120 is partially decrypted.

Note that the erasing part 55 may erase the second file 120 transmitted to the user terminal 200 as well as the first file 110 and the decrypted first file 110a related to the second file 120, also in the present embodiment.

### Third Embodiment

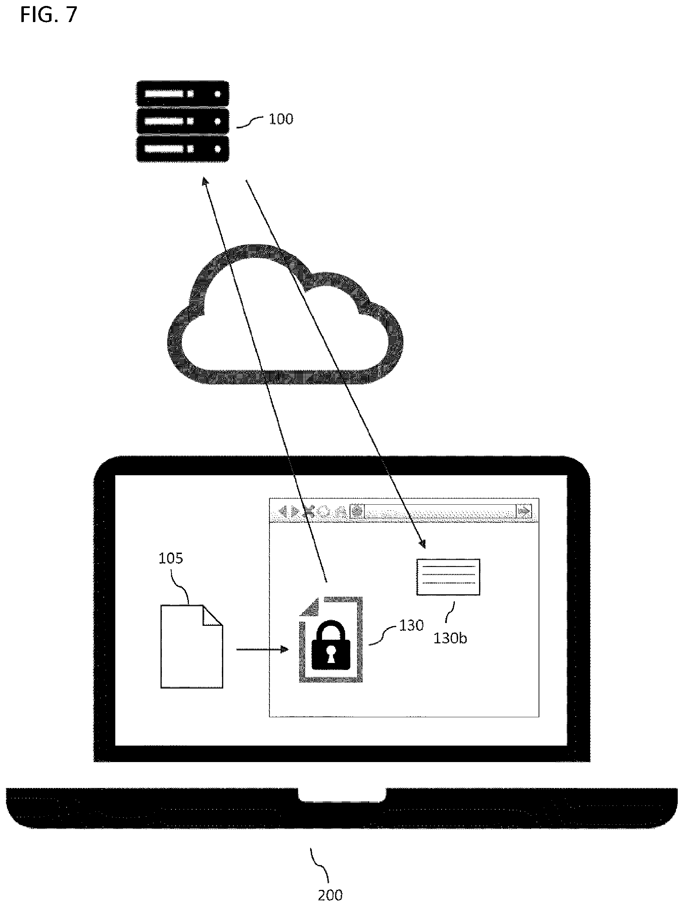

Next, a third embodiment of the present invention will be described mainly with reference to Fig. 7.

In an aspect of the first embodiment and the second embodiment, the encrypted first file 110 is transmitted from the user terminal 200 to the information processing device 100. In the present embodiment, the file such as the first file 110 as an original is not transmitted from the user terminal 200 to the information processing device 100. In an aspect of the present embodiment, the device receive part 60 receives the partial information of an encrypted third file 130 from the user terminal 200 (refer to Fig. 7). The third file 130 has a format that can be displayed by the browser of the user terminal 200. When the information processing device 100 receives the partial information of the third file 130, the decryption part 30 decrypts the partial information, and the decrypted partial information 130b of the third file 130 is to be transmitted to the user terminal 200. In the present embodiment, all aspects described in the first embodiment and the second embodiment can be adopted in the present embodiment. The same components as those in the first and second embodiments will be described with the same reference numerals.

In the present embodiment, files are not to be transmitted from the user terminal 200 to the information processing device 100, making it possible to simplify the processing and enhance the level of security.

Similarly to the description in the first embodiment, the user terminal 200 may transmit (post) the information of the third file 130 encrypted in the unit of n-bytes ("n" is an integer of 10,240 or more) to the information processing device 100, and the decryption part 30 may decrypt the information of the transmitted encrypted third file 130 formed in units of n-bytes.

The user terminal 200 may transmit the encrypted information of the third file 130 to the information processing device 100 by the size to be read. The size to be read may be the size displayed on a display screen of the user terminal 200 or the information of an identical page. In a case where the size to be read is the size displayed on the display screen of the user terminal 200, the user terminal 200 may transmit the partial information of the encrypted third file 130 to the information processing device 100 every time the screen is scrolled, and then, the decryption part 30 may decrypt the partial information of the encrypted third file 130 received from the user terminal 200, and then, the device transmit part 70 may transmit the partial information 130b of the decrypted third file 130 to the user terminal 200. In a case where the size to be read is information for one page, the user terminal 200 may transmit the partial information of the encrypted third file 130 to the information processing device 100 every time the page is changed, and the decryption part 30 may decrypt the partial information of the encrypted third file 130 received from the terminal 200, and then, the device transmit part 70 may transmit the partial information 130b of the decrypted third file 130 to the user terminal 200.

Moreover, the partial information of the third file 130 received by the device receive part 60 may be decrypted by the decryption part 30 to be directly transmitted to the user terminal 200 without being stored in the device storage part 90.

However, in the case of adopting an aspect in which the third file 130 is in a format that can be displayed by the browser of the user terminal 200 (for example, PDF format) in the present embodiment, there might be a problem in flexible operation. For example, even after the user authorization is changed to assign the first user who has received the wrapped file 105 the authorization to change file information wrapped in the wrapped file 105, the third file 130 such as PDF with a format that can be displayed by the browser is wrapped in the wrapped file 105, with no original data such as a Word or an Excel files wrapped in the wrapped file 105. Therefore, even when the first user has the authorization to change the information of the file wrapped in the wrapped file 105, processing of the file would be difficult since the wrapped file 105 does not have original data for the file. In this respect, for example, the wrapped file 105 wraps the first file 110 including original data such as Word or an Excel files in the first embodiment, and thus, there is an advantage in the first user in that it is possible to perform data processing using the original data in a case where the user authorization is changed to assign the authorization to the first user who has received the wrapped file 105 to change file information wrapped in the wrapped file 105.

When the third file 130 is encrypted and wrapped in the wrapped file 105, a dedicated application will be used as described above.

### Fourth Embodiment

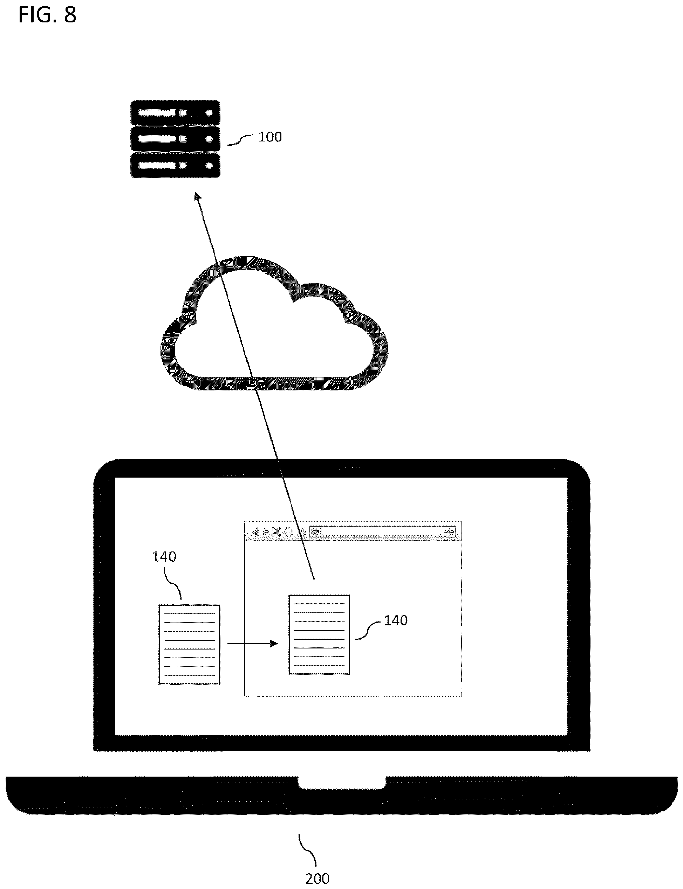

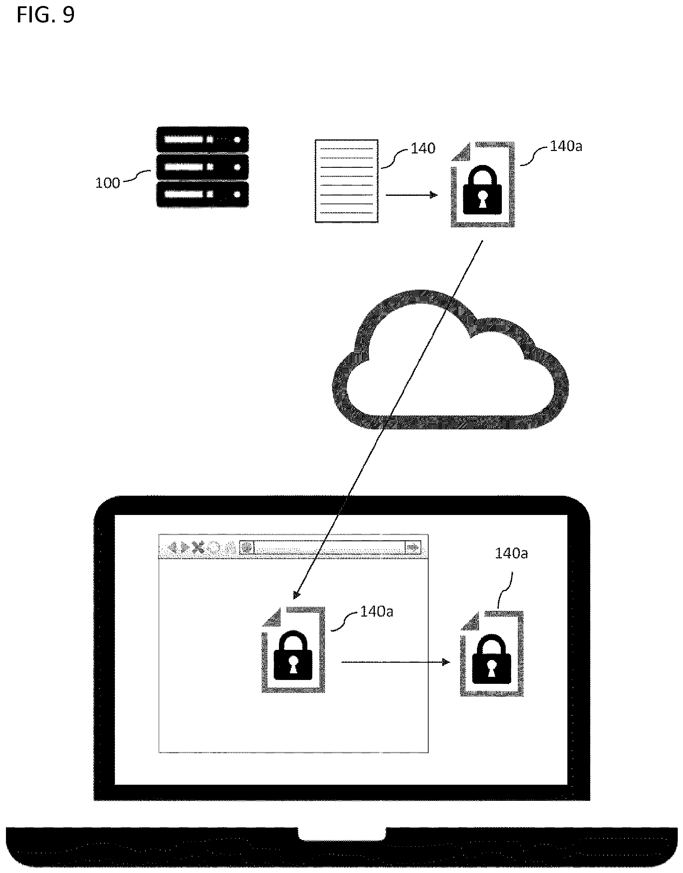

Next, a fourth embodiment of the present invention will be described mainly with reference to Figs. 8 and 9.

In each of the above-described embodiments, the description is given from the standpoint of the user who receives the file wrapped in the wrapped file 105. The present embodiment will be described from the standpoint of a user who wraps a file in the wrapped file 105 and transmits the file. In the present embodiment, an encryption part 40 is permitted to encrypt files such as a fourth file 140 in a case where the user authentication is normally performed by the identification-determination part 10, that is, where the identification-determination part 10 determines that the user is authorized to encrypt the file on the basis of information from the user terminal 200. When a file such as the fourth file 140 is encrypted, the device transmit part 70 transmits an encrypted fourth file 140a (hereinafter also referred to as "encrypted fourth file 140a") to the user terminal 200 (refer to Fig. 9). In the present embodiment, all aspects described in each of the above embodiments can be adopted in the present embodiment. The same components as those in the above-described respective embodiments will be described with the same reference numerals.

As an example, when the identification-determination part 10 of the information processing device 100 confirms that the user has an authorization of encrypting the file after user authentication performed by the identification-determination part 10 based on the information from the user terminal 200, the fourth file 140 is uploaded from the user terminal 200 to the information processing device 100, and then, the device receive part 60 of the information processing device 100 receives the fourth file 140 (refer to Fig. 8).

After the device receive part 60 has received the fourth file 140 in this manner, the encryption part 40 of the information processing device 100 encrypts the first file 110 to create the encrypted fourth file 140a (refer to Fig. 9).

After the encrypted fourth file 140a is created in this manner, the device transmit part 70 of the information processing device 100 transmits the encrypted fourth file 140a to the browser of the user terminal 200. Thereafter, the encrypted fourth file 140a can be stored in the storage part or the like of the user terminal 200.

According to the present aspect, a file such as the fourth file 140 can be encrypted by the information processing device 100 such as a server even when no dedicated application is installed.

In the present embodiment, the erasing part 55 may erase the fourth file 140 and the encrypted fourth file 140a.

Note that when the present embodiment is adopted, the processing aspect from the user terminal 200 on the receiving side may be adopted like the first to third embodiments, or conversely, the processing aspect from the user terminal 200 on the receiving side need not be adopted, unlike the first to third embodiments.

The disclosures of each embodiment and drawings are merely examples for explaining the inventions described in the claims, and the inventions are not limited by the disclosures of the descriptions or drawings of the above-described embodiments.

Each of components including the identification-determination part 10, the decryption part 30, the encryption part 40, the convert part 50, the erasing part 55 in each of the above-described embodiments may be implemented by a logic circuit (hardware) or a dedicated circuit formed in an integrated circuit, such as an IC chip or an LSI, or may be implemented by software using a CPU, memory, or the like. Furthermore, each of components may be implemented by one or more integrated circuits, or a plurality of components may be implemented by one integrated circuit.

### Reference Signs List

- 10: Identification-determination part
- 30: Decryption part
- 40: Encryption part
- 50: Convert part
- 55: Erasing part
- 60: Device receive part (receive part)
- 70: Device transmit part (transmit part)
- 100: Information processing device
- 110: First file
- 120: Second file
- 130: Third file
- 140: Fourth file
- 200: User terminal

## Claims

1. An information processing system comprising:
a user terminal (200) and
an information processing device (100) having:
a receive part (60) adapted to receive identification information to identify a user and a first encrypted file from the user terminal (200);
an identification-determination part adapted to identify the user based on the identification information and determine whether the user has a permission to read the first encrypted file;
a decryption part (30) adapted to decrypt the first encrypted file and obtain a first decrypted file in a case where the identification-determination part determines the user has the permission to read the first encrypted file; and
a convert part (50) adapted to convert the first decrypted file into a second file (120) in a format that can be displayed by a browser of the user terminal (200),
**characterized in that** the user terminal (200) is adapted to:
execute a wrapped file having a predetermined extension,
wherein the wrapped file comprises the first encrypted file;
as a result of executing the wrapped file, starting an application that allows the user terminal (200) to be communicatively connected to the information processing device (100);
retrieve the first encrypted file from the wrapped file; and
transmit the encrypted file to the information processing device (100);
wherein the information processing device is further adapted to perform user authentication to authenticate the user.

2. The information processing system, according to claim 1, wherein the information processing device (100) has
an encryption part (40) adapted to encrypt the second file (120), and
a transmit part (70) adapted to transmit the encrypted second file to the user terminal (200).

3. The information processing system, according to claim 2, wherein
the information processing device has an erasing part (55) adapted to erase the encrypted second file, after the transmit part (70) has transmitted the encrypted second file to the user terminal (200).

4. The information processing system, according to claim 2, wherein
the receive part (60) is further adapted to receive partial information of the encrypted second file from the user terminal (200) after the erasing part (55) has erased the encrypted second file, and
the decryption part (30) is further adapted to decrypt the partial information of the encrypted second file received from the user terminal, and
the transmit part (70) is further adapted to transmit the decrypted partial information of the encrypted second file to the user terminal (200).

5. The information processing system, according to claim 4, wherein
the receive part (60) is adapted to receive the partial information of the encrypted second file from the user terminal (200), in units of n-bytes ("n" is an integer of 10,240 or more),
the decryption part (30) is adapted to decrypt the partial information of the encrypted second file in units of n-bytes, and
the transmit part (70) is further adapted to transmit the decrypted partial information of the encrypted second file to the user terminal (200) in units of n-bytes.

6. The information processing system, according to claim 1, wherein
the receive part (60) is further adapted to receive partial information of a third encrypted file from the user terminal (200),
the decryption part (30) is further adapted to decrypt the partial information of the third encrypted file, and
the information processing device (100) has a transmit part (70) adapted to transmit the partial information of the third encrypted file to the user terminal (200).

7. The information processing system, according to claim 1, wherein the receive part (60) is further adapted to receive a fourth file (140) from the user terminal (200),
and the identification-determination part is further adapted to determine whether the user is authorized to encrypt the fourth file on the basis of information from the user terminal, and
the information processing device (100) has
an encryption part (40) adapted to encrypt the fourth file (140) in a case where the identification-determination part determines that the user is authorized to encrypt the fourth file, and
a transmit part (70) adapted to transmit the encrypted fourth file to the user terminal (200).

## Patentansprüche

1. Informationsverarbeitungssystem, umfassend:
ein Benutzerendgerät (200) und
eine Informationsverarbeitungsvorrichtung (100), die Folgendes aufweist:
einen Empfangsteil (60), der dazu ausgelegt ist, Identifikationsinformationen zum Identifizieren eines Benutzers und eine erste verschlüsselte Datei von dem Benutzerendgerät (200) zu empfangen;
einen Identifikationsbestimmungsteil, der dazu ausgelegt ist, den Benutzer basierend auf den Identifikationsinformationen zu identifizieren und zu bestimmen, ob der Benutzer eine Erlaubnis zum Lesen der ersten verschlüsselten Datei hat;
einen Entschlüsselungsteil (30), der dazu ausgelegt ist, die erste verschlüsselte Datei zu entschlüsseln und eine erste entschlüsselte Datei zu erhalten, falls der Identifikationsbestimmungsteil bestimmt, dass der Benutzer die Erlaubnis hat, die erste verschlüsselte Datei zu lesen; und
einen Konvertierungsteil (50), der dazu ausgelegt ist, die erste entschlüsselte Datei in eine zweite Datei (120) in einem Format zu konvertieren, das von einem Browser des Benutzerendgeräts (200) angezeigt werden kann,
**dadurch gekennzeichnet, dass** das Benutzerendgerät (200) zu Folgendem ausgelegt ist:
Ausführen einer verpackten Datei mit einer vorgegebenen Erweiterung,
wobei die verpackte Datei die erste verschlüsselte Datei umfasst;
als Ergebnis des Ausführens der verpackten Datei Starten einer Anwendung, die es dem Benutzerendgerät (200) ermöglicht, kommunikativ mit der Informationsverarbeitungsvorrichtung (100) verbunden zu werden;
Abrufen der ersten verschlüsselten Datei aus der verpackten Datei; und
Übertragen der verschlüsselten Datei an die Informationsverarbeitungsvorrichtung (100);
wobei die Informationsverarbeitungsvorrichtung ferner dazu ausgelegt ist, Benutzerauthentifizierung durchzuführen, um den Benutzer zu authentifizieren.

2. Informationsverarbeitungssystem nach Anspruch 1, wobei die Informationsverarbeitungsvorrichtung (100) Folgendes aufweist:
einen Verschlüsselungsteil (40), der dazu ausgelegt ist, die zweite Datei (120) zu verschlüsseln, und
einen Übertragungsteil (70), der dazu ausgelegt ist, die verschlüsselte zweite Datei an das Benutzerendgerät (200) zu übertragen.

3. Informationsverarbeitungssystem nach Anspruch 2, wobei
die Informationsverarbeitungsvorrichtung einen Löschteil (55) aufweist, der dazu ausgelegt ist, die verschlüsselte zweite Datei zu löschen, nachdem der Übertragungsteil (70) die verschlüsselte zweite Datei an das Benutzerendgerät (200) übertragen hat.

4. Informationsverarbeitungssystem nach Anspruch 2, wobei
der Empfangsteil (60) ferner dazu ausgelegt ist, Teilinformationen der verschlüsselten zweiten Datei von dem Benutzerendgerät (200) zu empfangen, nachdem der Löschteil (55) die verschlüsselte zweite Datei gelöscht hat, und
der Entschlüsselungsteil (30) ist ferner dazu ausgelegt, die Teilinformationen der verschlüsselten zweiten Datei, die von dem Benutzerendgerät empfangen werden, zu entschlüsseln, und
der Übertragungsteil (70) ferner dazu ausgelegt ist, die entschlüsselten Teilinformationen der verschlüsselten zweiten Datei an das Benutzerendgerät (200) zu übertragen.

5. Informationsverarbeitungssystem nach Anspruch 4, wobei
der Empfangsteil (60) dazu ausgelegt ist, die Teilinformationen der verschlüsselten zweiten Datei von dem Benutzerendgerät (200) in Einheiten von n Bytes zu empfangen ("n" ist eine ganze Zahl von 10.240 oder mehr), der Entschlüsselungsteil (30) dazu ausgelegt ist, die Teilinformationen der verschlüsselten zweiten Datei in Einheiten von n Bytes zu entschlüsseln, und
der Übertragungsteil (70) ferner dazu ausgelegt ist, die entschlüsselten Teilinformationen der verschlüsselten zweiten Datei in Einheiten von n Bytes an das Benutzerendgerät (200) zu übertragen.

6. Informationsverarbeitungssystem nach Anspruch 1, wobei
der Empfangsteil (60) ferner dazu ausgelegt ist, Teilinformationen einer dritten verschlüsselten Datei von dem Benutzerendgerät (200) zu empfangen,
der Entschlüsselungsteil (30) ferner dazu ausgelegt ist, die Teilinformationen der dritten verschlüsselten Datei zu entschlüsseln, und
die Informationsverarbeitungsvorrichtung (100) einen Übertragungsteil (70) aufweist, der dazu ausgelegt ist, die Teilinformationen der dritten verschlüsselten Datei an das Benutzerendgerät (200) zu übertragen.

7. Informationsverarbeitungssystem nach Anspruch 1, wobei der Empfangsteil (60) ferner dazu ausgelegt ist, eine vierte Datei (140) von dem Benutzerendgerät (200) zu empfangen,
und der Identifikationsbestimmungsteil ferner dazu ausgelegt ist, basierend auf Informationen von dem Benutzerendgerät zu bestimmen, ob der Benutzer berechtigt ist, die vierte Datei zu verschlüsseln, und
die Informationsverarbeitungseinrichtung (100) Folgendes aufweist:
einen Verschlüsselungsteil (40), der dazu ausgelegt ist, die vierte Datei (140) zu verschlüsseln, falls der Identifikationsbestimmungsteil bestimmt, dass der Benutzer berechtigt ist, die vierte Datei zu verschlüsseln, und
einen Übertragungsteil (70), der dazu ausgelegt ist, die verschlüsselte vierte Datei an das Benutzerendgerät (200) zu übertragen.

## Revendications

1. Système de traitement de l'information comprenant :
un terminal utilisateur (200) et
un dispositif de traitement de l'information (100) comportant :
une partie réception (60) conçue pour recevoir des informations d'identification pour identifier un utilisateur et un premier fichier crypté provenant du terminal utilisateur (200) ;
une partie identification-détermination conçue pour identifier l'utilisateur sur la base des informations d'identification et déterminer si l'utilisateur a l'autorisation de lire le premier fichier crypté ;
une partie décryptage (30) conçue pour décrypter le premier fichier crypté et obtenir un premier fichier décrypté dans un cas où la partie identification-détermination détermine que l'utilisateur a la permission de lire le premier fichier crypté ; et
une partie conversion (50) conçue pour convertir le premier fichier décrypté en un deuxième fichier (120) dans un format affichable par un navigateur du terminal utilisateur (200),
**caractérisé en ce que** le terminal utilisateur (200) est conçu pour :
exécuter un fichier encapsulé ayant une extension prédéterminée,
dans lequel le fichier encapsulé comprend le premier fichier crypté ;
à la suite de l'exécution du fichier encapsulé, démarrer une application qui permet au terminal utilisateur (200) d'être connecté de manière communicative au dispositif de traitement de l'information (100) ;
récupérer le premier fichier crypté à partir du fichier encapsulé ; et
transmettre le fichier crypté au dispositif de traitement de l'information (100) ;
dans lequel le dispositif de traitement de l'information est conçu en outre pour effectuer une authentification d'utilisateur afin d'authentifier l'utilisateur.

2. Système de traitement de l'information selon la revendication 1, dans lequel le dispositif de traitement de l'information (100) comporte
une partie cryptage (40) conçue pour crypter le deuxième fichier (120), et
une partie transmission (70) conçue pour transmettre le deuxième fichier crypté au terminal utilisateur (200).

3. Système de traitement de l'information selon la revendication 2, dans lequel
le dispositif de traitement de l'information comporte une partie d'effacement (55) conçue pour effacer le deuxième fichier crypté, après que la partie transmission (70) a transmis le deuxième fichier crypté au terminal utilisateur (200).

4. Système de traitement de l'information selon la revendication 2, dans lequel
la partie réception (60) est conçue en outre pour recevoir des informations partielles du deuxième fichier crypté en provenance du terminal utilisateur (200) après que la partie d'effacement (55) a effacé le deuxième fichier crypté, et
la partie décryptage (30) est conçue en outre pour décrypter les informations partielles du deuxième fichier crypté reçu du terminal utilisateur, et
la partie transmission (70) est conçue en outre pour transmettre les informations partielles décryptées du deuxième fichier crypté au terminal utilisateur (200).

5. Système de traitement de l'information selon la revendication 4, dans lequel
la partie réception (60) est conçue pour recevoir les informations partielles du deuxième fichier crypté en provenance du terminal utilisateur (200), en unités de n octets (« n » est un entier de 10 240 ou plus),
la partie décryptage (30) est conçue pour décrypter les informations partielles du deuxième fichier crypté en unités de n octets, et
la partie transmission (70) est conçue en outre pour transmettre les informations partielles décryptées du deuxième fichier crypté au terminal utilisateur (200) en unités de n octets.

6. Système de traitement de l'information selon la revendication 1, dans lequel
la partie réception (60) est conçue en outre pour recevoir des informations partielles d'un troisième fichier crypté en provenance du terminal utilisateur (200),
la partie décryptage (30) est conçue en outre pour décrypter les informations partielles du troisième fichier crypté, et
le dispositif de traitement de l'information (100) comporte une partie de transmission (70) conçue pour transmettre les informations partielles du troisième fichier crypté au terminal utilisateur (200).

7. Système de traitement de l'information selon la revendication 1, dans lequel la partie réception (60) est conçue en outre pour recevoir un quatrième fichier (140) en provenance du terminal utilisateur (200),
et la partie identification-détermination est conçue en outre pour déterminer si l'utilisateur est autorisé à crypter le quatrième fichier sur la base d'informations provenant du terminal utilisateur, et
le dispositif de traitement de l'information (100) comporte
une partie cryptage (40) conçue pour crypter le quatrième fichier (140) dans un cas où la partie identification-détermination détermine que l'utilisateur est autorisé à crypter le quatrième fichier, et
une partie transmission (70) conçue pour transmettre le quatrième fichier crypté au terminal utilisateur (200).
